# EUROPEAN PATENT APPLICATION

(11) **EP 2 423 718 A2**
(43) Date of publication of application: **29.02.2012**
(21) Application number: 11177641.5
(22) Date of filing: 16.08.2011
(51) Int. Cl.: G02B 6/00

(54) **Light guide plate and light source module**

(30) Priority: 25.08.2010 TW 099128494
(71) Applicant: Young Lighting Technology Corporation, Hsin-Chu 300 (TW)
(72) Inventor: Lin, Sheng-Hung, 300 Hsinchu (TW); Hwang, Jung-Min, 300 Hsinchu (TW)
(74) Representative: TER MEER - STEINMEISTER & PARTNER GbR

(57) **Abstract**

A light guide plate including a first surface (210), a second surface (220), a first light incident surface (230), and a first protruding portion is provided (240). The second surface is opposite to the first surface, and the first light incident surface connects the first surface and the second surface. The first protruding portion is disposed on a junction between the first light incident surface and the first surface. The first protruding portion has a first curved protruding surface (242) connected with the first surface and facing away from the second surface. A light source module (100) is also provided.

## Description

### CROSS-REFERENCE TO RELATED APPLICATION

This application claims the priority benefit of Taiwan application serial no. 99128494, filed August 25, 2010. The entirety of the above-mentioned patent application is hereby incorporated by reference herein and made a part of this specification.

### BACKGROUND OF THE INVENTION

### Field of the Invention

The invention is related to an optical device and an optical module adopting the optical device. More particularly, the invention is related to a light guide plate and a light source module.

### Description of Related Art

In a traditional side incident type light source module, a light guide plate is used to guide the emitted light beams from a light emitting device disposed on a side surface of the light guide plate (i.e. a light incident surface) to the front of the light guide plate, to form a uniform surface light source. Because an incident angle of the light beam entering the inner portion of the light guide plate from a side surface of the light guide plate and then striking the front surface or back surface of the light guide plate is usually greater than a critical angle, the light beam is continuously totally reflected by the front surface and back surface of the light guide plate. Thus, the light beam is limited by the light guide plate.

In conventional techniques, in order to guide the light beam to the front of the light guide plate, optical microstructures are usually disposed on at least one of the front surface and the back surface of the light guide plate, so as to disrupt the total internal reflection of the light beam, and make the light beam emitting out from the front of the light guide plate.

In addition, there is usually a space between the light emitting device and the incident surface, to prevent deformation in the light guide plate from overheating, or to prevent the problem of excessive brightness in a position close to the light incident surface of the surface light source. However, the light incident surface of the conventional light guide plate is a flat surface. When the light emitting device and light incident surface maintains a space, the light beams emitted by a wide angle from the light-emitting device may be unable to enter the light guide plate through the light incident surface. Thus, the light energy may be wasted, and so the light source coupling efficiency may be unable to improve.

Moreover, if reflection sheets are disposed on two sides, top and bottom, beside the light incident side, even though the aforementioned problem may be improved, adding reflection sheets may increase the production cost of the light source module. Besides, the reflection sheets need fabricating to a appropriate position to carry out the effectiveness. The fabrication time of the light source module may be increased, and the production cost of the light source module is also enhanced.

Taiwan Patent No. 442674 discloses a liquid crystal display device, wherein light source units of a backlight device are positioned in an end of a trench of a light guiding unit. Taiwan Patent No. M276216, U.S. Patent No. 5404277, U.S. Patent Application Publication No. 20070091640, and Taiwan Patent No. M294665 respectively provide a plurality of backlight modules. Taiwan Patent Application Publication No. 200942743 discloses a light source device using a light guide plate. Taiwan Patent No. M317584, U.S. Patent No. 6779902, and U.S. Patent No. 7001058 also respectively provide a plurality of light guide plates.

### SUMMARY OF THE INVENTION

The invention provides a light guide plate, and the light guide plate may improve the utilization of light.

The invention provides a light source module, and the light source module has higher light source coupling efficiency and light utilization effectiveness, and has a lower production cost.

Other objects and advantages of the invention may be further illustrated by the technical features broadly embodied and described as follows.

In order to achieve one or a part of or all of the above advantages or other advantages, an embodiment of the invention provides a light guide plate, including a first surface, a second surface, a first light incident surface, and a first protruding portion. The second surface is opposite to the first surface, and the first light incident surface connects the first surface and the second surface. The first protruding portion is disposed on a junction between the first light incident surface and the first surface, wherein the first protruding portion includes a first curved protruding surface connected with the first surface and facing away from the second surface.

Another embodiment of the invention provides a light source module, including the above light guide plate and at least one light emitting device. The light-emitting device is disposed beside the first light incident surface.

In summary, the embodiment or embodiments of the invention may have at least one of the following advantages. The light guide plate of an embodiment of the invention includes the first protruding portion disposed on a junction between the first light incident surface and the first surface, wherein the first protruding portion is adapted to collect a light beam with wide angle deviated from the first light incident surface, and the first curved protruding surface is adapted to guide the collected light beams to somewhere between the first surface and the second surface through a total reflection effect. Thus, the light guide plate of an embodiment of the invention may avoid the light beam with wide angle being wasted, and improve light efficiency. Also, the light source coupling efficiency and the light efficiency of the light source module of an embodiment of the invention may be improved.

Other objectives, features and advantages of the invention will be further understood from the further technological features disclosed by the embodiments of the invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.

Fig. 1A is a schematic three-dimensional view of a light source module according to an embodiment of the invention.

Fig. 1B is a schematic cross-sectional view illustrating the light source module of Fig. 1A along line I-I.

Fig. 2A and Fig. 2B illustrate the control groups of an embodiment of the invention.

Fig. 2C illustrates a light emitting device and a light guide plate according to another embodiment of the invention.

### DESCRIPTION OF EMBODIMENTS

In the following detailed description of the preferred embodiments, reference is made to the accompanying drawings, which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

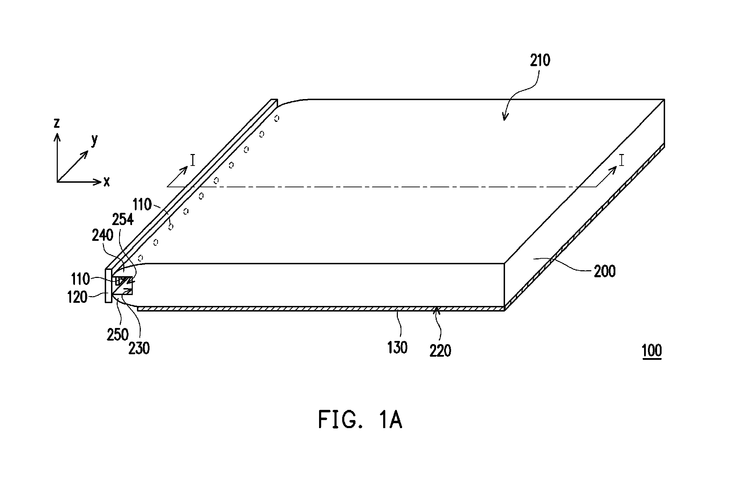

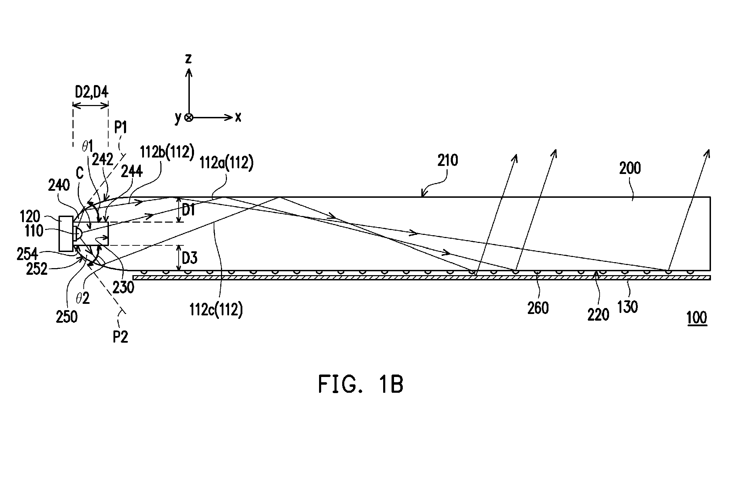

Please refer to Fig. 1A and Fig. 1B. The light source module 100 of the embodiment includes a light guide plate 200 and at least one light-emitting device 110 (a plurality of light emitting devices 110 in Fig. 1A are exemplary). The light guide plate 200 includes a first surface 210, a second surface 220, a first light incident surface 230, and a first protruding portion 240. The second surface 220 is opposite to the first surface 210, and the first light incident surface 230 connects the first surface 210 and the second surface 220. In order to clearly and easily explain the components or structure aspects of the light source module 100, the following coordinate system is defined. A z direction is substantially perpendicular to the first surface 210, an x direction is substantially perpendicular to the first light incident surface 230, and a y direction is substantially parallel to an extending direction of first light incident surface 230, and the x direction, the y direction, and the z direction are perpendicular to each other. In the embodiment, the second surface 220 is also substantially perpendicular to the z direction, that is to say the first surface 210 and the second surface 220 are substantially parallel. However, in another embodiment, the second surface 220 may also slope with respect to the first surface 210, which means the second surface 220 may also not be perpendicular to the z direction.

The first protruding portion 240 is disposed on a junction between the first light incident surface 230 and the first surface 210. The first protruding portion 240 includes a first curved protruding surface 242 connected with the first surface 210 and facing away from the second surface 220. In the embodiment, the light guide plate 200 further includes a second protruding portion 250, disposed on a junction between the first light incident surface 230 and the second surface 220, wherein the second protruding portion 250 includes a second curved protruding surface 252 connected with the second surface 220 and facing away from the first surface 210.

In the embodiment, the first protruding portion 240 further includes a second light incident surface 244 facing away from the first curved protruding surface 242 and connecting the first curved protruding surface 242 and the first light incident surface 230. Besides, in the embodiment, the second protruding portion 250 further includes a third light incident surface 254 facing away from the second curved protruding surface 252 and connecting the second curved protruding surface 252 and the first light incident surface 230, wherein the second light incident surface 244 and the third light incident surface 254 face each other.

Light emitting devices 110 are disposed beside the first light incident surface 230. In the embodiment, these light emitting devices 110 are substantially arranged along the y direction, and the first light incident surface 230, the second light incident surface 244, the third light incident surface 254, the first curved protruding surface 242, and the second curved protruding surface 252 are substantially extended along the y direction. In the embodiment, the light emitting devices 110 may be light-emitting diodes (LEDs). However, in other embodiments, the LEDs may also be replaced by a cold cathode fluorescent lamp (CCFL) substantially extending along the y direction or other light emitting devices. Also, in the embodiment, the first curved protruding surface 242 and the second curved protruding surface 252 have no curves along the y direction, but have curves on a surface parallel to the x-z plane. Furthermore, in the embodiment, the first light incident surface 230, the second light incident surface 244, and the third light incident surface 254 form a containing space C to contain the light emitting devices 110. Moreover, in the embodiment, the light emitting devices 110 are disposed on a substrate 120, and the first protruding portion 240 and the second protruding portion 250 are forced against the substrate 120, wherein the substrate 120 may be a circuit board. In addition, in the embodiment, the first curved protruding surface 242 and the first surface 210 are smoothly connected, so the gradient at the connecting location of the first curved protruding surface 242 and the first surface 210 shows a continuous change.

In the embodiment, the light emitting devices 110 are capable of emitting a light beam 112, the light beam 112 may enter the light guide plate 200 through the first light incident surface 230, the second light incident surface 244, or the third light incident surface 254, and is capable of being transmitted to the outside of the light guide plate 200 through the first surface 210. Specifically, in the embodiment, the emitting direction of a light beam 112a (the light beam 112a with a smaller emitting angle) approaching the optical axis direction of the light emitting device 110 enters the light guide plate 200 through the first light incident surface 230. The emitting directions of a light beam 112b and a light beam 112c having larger deviations from the optical axis of the light emitting device 110 respectively enter the light guide plate 200 through the second light incident surface 244 and the third light incident surface 254. After the light beam 112 enters the light guide plate 200, the light beam 112 is suitable to be continuously totally reflected by the first surface 210 and the second surface 220, whereby the light beam 112 may be limited in the light guide plate 200. However, a light scattering microstructure 260 disposed on a surface of the light guide plate 200 may disrupt the total reflection and cause the light beam 112 to emit out from the first surface 210. In the embodiment, the light scattering microstructures 260 are, for example, disposed on the second surface 220. However, in other embodiments, the light scattering microstructures 260 may also be disposed on the first surface 210, or be disposed on both the first surface 210 and the second surface 220. Specifically, the light scattering microstructures 260 are capable of directly scattering part of the light beam 112 to the first surface 210, and the light beam 112 may pass through the first surface 210. In addition, in the embodiment, the light source module 100 further includes a reflective unit 130, disposed on the second surface 220, and the light scattering microstructure 260 is suitable to scatter the other part of the light beam 112 to the reflective unit 130. The reflective unit 130 is, for example, a reflective sheet, and the reflective unit 130 is suitable to reflect the light beam 112, causing the light beam 112 to sequentially pass through the second surface 220 and the first surface 210. Hence, the light source module 100 may form a surface light source on the first surface 210. In other words, the first surface 210 is a light-emitting surface.

However, in other embodiments, the reflective unit 130 may also be disposed on the first surface 210. The light beam 112 then exits from the second surface 220; that is, the second surface 220 is a light-emitting surface. Also, in other embodiments, the light source module 100 may also not include the reflective unit 130, and the light beam 112 is simultaneously emitted from first surface 210 and the second surface 220, and both the first surface 210 and the second surface 220 are light-emitting surfaces.

Regarding the light source module 100 of the embodiment, because the light guide plate 200 includes the first protruding portion 240 disposed on a junction between the first light incident surface 230 and the first surface 210 and a second protruding portion 250 disposed on a junction between the first light incident surface 230 and the second surface 220, the first protruding portion 240 and the second protruding portion 250 are capable of collecting a light beam with wide angle (such as light beams 112b or 112c) deviated from the first light incident surface 230, and the first curved protruding surface 242 and the second curved protruding surface 252 are capable of guiding the collected light to somewhere between the first surface 210 and the second surface 220 via total reflection effect. Thus, the light guide plate 200 of the embodiment avoids wasting the light beam with wide angle, and improves light efficiency. Also, the light source coupling efficiency and the light efficiency of the light source module 100 of the embodiment is improved.

In addition, because the light beam with wide angle may not be wasted via the total reflection effect of the first curved protruding surface 242 and the second curved protruding surface 252 to guide the light beam with wide angle to the light guide plate 200, thus, the light source module 100 may not have to adopt the reflective units located on the two sides of the light emitting device 110 and disposed close to the first light incident surface 230 of the light guide plate 200. Therefore, the light source module 100 of the embodiment has a reduction in material, and the production cost of the light source module 100 may also be reduced. Furthermore, the formation method of the light guide plate 200 may be an extrusion method that extrudes the light guide plate 200 along the y direction with a lower fabrication cost, thus the fabrication cost of the light source module 100 may effectively be reduced.

It should be noted that in other embodiments, the light guide plate also may include one of the first protruding portion 240 and the second protruding portion 250. Thus, there may be no need to simultaneously include the first protruding portion 240 and the second protruding portion 250, and the light guide plate may still improve the light efficiency. The first surface 210 may be a light-emitting surface when the light guide plate only includes a first protruding portion 240, and the reflective unit 130 is disposed on the second surface 220. Perhaps, the second surface 220 may also be a light-emitting surface, and the reflective unit is disposed on the first surface 210. Similarly, the first surface 210 may be a light-emitting surface when the light guide plate only includes a second protruding portion 250, and the reflective unit 130 is disposed on the second surface 220. Perhaps, the second surface 220 may be a light-emitting surface, and the reflective unit 130 is disposed on the first surface 210. Furthermore, no matter the light guide plate including just the first protruding portion 240 or the second protruding portion 250, the first surface 210 and the second surface 220 may also simultaneously be light-emitting surfaces, and the light source module may not require the reflective unit 130.

In order for the first curved protruding surface 242 to have a better total reflection effect, in the embodiment, an included angle θ1 between a tangent plane P1 of the first curved protruding surface 242 adjacent to the second light incident surface 244 and the second light incident surface 244 is in a range of 20-90 degrees. Furthermore, in order to let the first curved protruded surface 242 have a better total reflection effect, in the embodiment, a ratio acquired from dividing a first distance D1 between the second light incident surface 244 and the first surface 210 by a second distance D2 from the junction between the first curved protruding surface 242 and the second light incident surface 244 to the first light incident surface 230 is greater than or equal to 0.33, wherein the first distance D1 is along a direction perpendicular to the first surface 210, and the second distance D2 is along a direction perpendicular to the first light incident surface 230.

In addition, in order for the second curved protruding surface 252 to have a better total reflection effect, in the embodiment, an included angle θ2 between a tangent plane P2 of the second curved protruding surface 252 adjacent to the third light incident surface 254 and the third light incident surface 254 is in a range of 20-90 degrees. Furthermore, in order to let the second curved protruded surface 252 have a better total reflection effect, in the embodiment, a ratio acquired from dividing.

a third distance D3 between the third light incident surface 254 and the second surface 220 by a fourth distance D4 from the junction between the second curved protruding surface 252 and the third light incident surface 254 to the first light incident surface 230 is greater than or equal to 0.33, wherein the third distance D3 is along a direction perpendicular to the second surface 220, and the fourth distance D4 is along a direction perpendicular to the first light incident surface 230.

The following used experiments to verify that the light guide plate of the embodiment of the invention may indeed improve light efficiency.

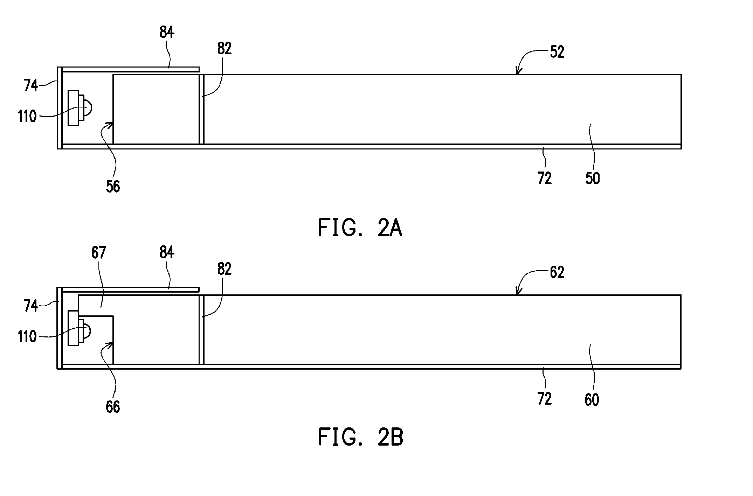

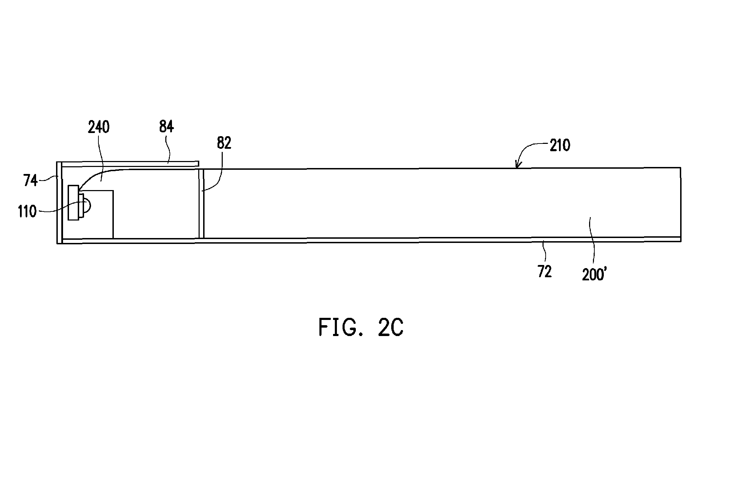

Please refer to Figs. 2A through 2C. In Fig. 2A, the light emitting device 110 is disposed beside the light incident surface 56 of the light guide plate 50, wherein the light incident surface 56 is a planar shape and the side thereof has no protruding portions. In Fig. 2B, the light emitting device 110 is disposed beside the light incident surface 66 of the light guide plate 60, wherein a side of the light incident surface 66 has a rectangular protruding portion 67. Fig. 2C illustrates a light guide plate 200' of an embodiment of the invention similar to the light guide plate 200 of Fig. 1A. The difference between the two is that the light guide plate 200' includes a first protruding portion 240, but does not include of a second protruding portion 250. In order for the embodiment and the experimental parameters of the two control groups to have consistency, in the three structures of Fig. 2A, Fig. 2B, and Fig. 2C, each includes a reflective piece 72, a reflective piece 74, a light sensor 82, and a light sensor 84. The light sensor 82 is set in the light guide plates 50, 60, and 200'. The light sensor 84 is set in a side of the light emitting device 110, and set in a side of the first surfaces 52, 62, and 210. In the experiment, the emitted light of the adopted light emitting device 110 of Fig. 2A, Fig. 2B, and Fig. 2C is set as 100 lumens, and the light emitting device 100 of Fig. 2A, Fig. 2B, and Fig. 2C are Lambertian light sources each having the emitted light angle greater than or equal to 20 degrees. If the light sensor 82 senses a larger proportion of light energy, then more light energy is able to be used with effectiveness by the light guide plate. If the light sensor 84 senses a larger proportion of light energy, then the light beam with wide angle originated from the light emitting device 110 are projected easier from the side, and the light beam with wide angle may not be used effectively by the light guide plate.

The following table, Table 1, is a table of the experimental data:

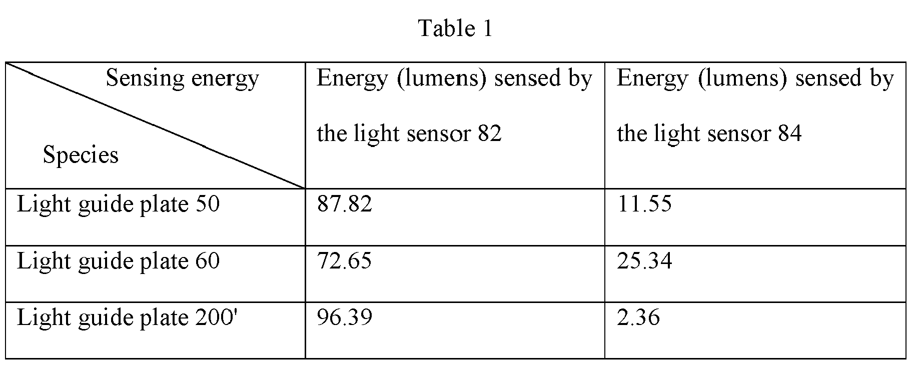

As seen in Table 1, the adopted light guide plate 200' may make the light sensor 82 sense higher energy (96.39 lumens), and may make the light sensor 84 sense lower energy (2.36 lumens), and therefore the light guide plate 200' may effectively improve the light efficiency, and lower the loss of light energy. Accordingly, the light source module 100 and the light guide plate 200 of Fig. 1B may improve light usage effectiveness.

In summary, the embodiment or embodiments of the invention may have at least one of the following advantages. The light guide plate of an embodiment of the invention includes the protruding portion disposed beside the first light incident surface, the protruding portion is capable of collecting the light beam with wide angle deviated from the first light incident surface, and the curved protruding surface is capable of guiding the collected light to somewhere between the first surface and the second surface via total reflection effect. Thus, the light guide plate of an embodiment of the invention may avoid wasting wide angle light, and improves light efficiency. Therefore, the light source coupling efficiency and the light efficiency of the light source module of an embodiment of the invention is improved.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the spirit and scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the invention as defined by the following claims. Moreover, no element and component in the present disclosure is intended to be dedicated to the public regardless of whether the element or component is explicitly recited in the following claims.

## Claims

1. A light guide plate, comprising:
a first surface;
a second surface, opposite to the first surface;
a first light incident surface, connecting the first surface and the second surface; and
a first protruding portion, disposed on a junction between the first light incident surface and the first surface, wherein the first protruding portion comprises a first curved protruding surface connected with the first surface and facing away from the second surface.

2. The light guide plate of claim 1, wherein the first protruding portion further comprises a second light incident surface facing away from the first curved protruding surface and connecting the first curved protruding surface and the first light incident surface.

3. The light guide plate of claim 2, wherein an included angle between a tangent plane of the first curved protruding surface adjacent to the second light incident surface and the second light incident surface is in a range of 20 to 90 degrees.

4. The light guide plate of claim 2, wherein a ratio acquired from dividing a first distance between the second light incident surface and the first surface by a second distance from a junction between the first curved protruding surface and the second light incident surface to the first light incident surface is greater than or equal to 0.33, wherein the first distance is along a direction perpendicular to the first surface, and the second distance is along a direction perpendicular to the first light incident surface.

5. The light guide plate of claim 1, wherein the first curved protruding surface is smoothly connected to the first surface.

6. The light guide plate of claim 1, further comprising a second protruding portion, disposed on a junction between the first light incident surface and the second surface, wherein the second protruding portion comprises a second curved protruding surface connected with the second surface and facing away from the first surface.

7. The light guide plate of claim 6, wherein the first protruding portion further comprises a second light incident surface facing away from the first curved protruding surface and connecting the first curved protruding surface and the first light incident surface, the second protruding portion comprises a third light incident surface facing away from the second curved protruding surface and connecting the second curved protruding surface and the first light incident surface, and the second light incident surface and the third light incident surface face each other.

8. The light guide plate of claim 7, wherein an included angle between a tangent plane of the second curved protruding surface adjacent to the third light incident surface and the third light incident surface is in a range of 20 to 90 degrees.

9. The light guide plate of claim 7, wherein a ratio acquired from dividing a third distance between the third light incident surface and the second surface by a fourth distance from a junction between the second curved protruding surface and the third light incident surface to the first light incident surface is greater than or equal to 0.33, wherein the third distance is along a direction perpendicular to the second surface, and the fourth distance is along a direction perpendicular to the first light incident surface.

10. A light source module, comprising:
a light guide plate, according to anyone of claims 1 to 6; and
at least one light emitting device, disposed beside the first light incident surface.

11. The light source module of claim 10, wherein the first protruding portion of the light guide plate of claim 6 further comprises a second light incident surface facing away from the first curved protruding surface and connecting the first curved protruding surface and the first light incident surface, the second protruding portion further comprises a third light incident surface facing away from the second curved protruding surface and connecting the second curved protruding surface and the first light incident surface, the second light incident surface and the third light incident surface face each other, and the first light incident surface, the second light incident surface, and the third light incident surface form a containing space to contain the light emitting device.

12. The light source module of claim 11, wherein an included angle between a tangent plane of the second curved protruding surface adjacent to the third light incident surface and the third light incident surface is in a range of 20 to 90 degrees.

13. The light source module of claim 11, wherein a ratio acquired from dividing a third distance between the third light incident surface and the second surface by a fourth distance from a junction between the second curved protruding surface and the third light incident surface to the first light incident surface is greater than or equal to 0.33, wherein the third distance is along a direction perpendicular to the second surface, and the fourth distance is along a direction perpendicular to the first light incident surface.

14. The light source module of anyone of claims 10 to 13, further comprising a reflective unit, disposed on one of the first surface and the second surface.

15. The light source module of anyone of claims 10 to 13, wherein at least one of the first surface and the second surface is a light-emitting surface.
